(19)

**Europäisches Patentamt**

**European Patent Office**

**Office européen des brevets**

(11) **EP 4 136 695 B1**

(12) **EUROPEAN PATENT SPECIFICATION**

(45) Date of publication and mention
of the grant of the patent:
**20.03.2024 Bulletin 2024/12**

(21) Application number: **21726969.5**

(22) Date of filing: **14.04.2021**

(51) International Patent Classification (IPC):
*H01M 10/04* (2006.01)      *H01M 10/0583* (2010.01)
*H01G 13/02* (2006.01)      *H01M 10/0585* (2010.01)
*B65H 23/195* (2006.01)      *H01G 11/84* (2013.01)

(52) Cooperative Patent Classification (CPC):
**H01M 10/0409; H01G 11/84; H01G 13/02;**
**H01M 10/0431; H01M 10/045; H01M 10/0583;**
**H01M 10/0585;** Y02E 60/10; Y02P 70/50

(86) International application number:
**PCT/IB2021/053078**

(87) International publication number:
**WO 2021/209923 (21.10.2021 Gazette 2021/42)**

(54) **SUPPORT APPARATUS AND METHOD FOR THE PRODUCTION OF ELECTRIC ENERGY STORAGE DEVICES**

TRÄGERVORRICHTUNG UND VERFAHREN ZUR HERSTELLUNG VON ELEKTRISCHEN ENERGIESPEICHERN

APPAREIL DE SUPPORT ET PROCÉDÉ DE PRODUCTION DE DISPOSITIFS DE STOCKAGE D'ÉNERGIE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2020   IT 202000007840**
**14.04.2020   IT 202000007849**

(43) Date of publication of application:
**22.02.2023   Bulletin 2023/08**

(73) Proprietor: **Manz Italy S.r.l.**
**40037 Sasso Marconi (BO) (IT)**

(72) Inventors:
• **BELLANO, Pietro**
**40037 Sasso Marconi (BO) (IT)**
• **NANNI, Fabrizio**
**40037 Sasso Marconi (BO) (IT)**

(74) Representative: **Studio Torta S.p.A.**
**Viale Antonio Silvani, 6**
**40122 Bologna (IT)**

(56) References cited:
**EP-A1- 2 569 816        JP-A- 2010 235 301**
**US-A1- 2013 248 636     US-A1- 2019 352 123**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This patent application claims priority from Italian patent application no. 102020000007840 filed on 14/04/2020 and Italian patent application no. 102020000007849 filed on 14/04/2020.

TECHNICAL FIELD

The invention relates to a support apparatus, to a machine and to a relative method for the production of electric energy storage devices.

In particular, the invention finds advantageous, though non-exclusive, application in the production of rechargeable batteries, to which explicit reference will be made in the description below without because of this loosing in generality.

CONTEXT OF THE INVENTION

The production of rechargeable batteries generally involves the overlapping of different layers of electrodes (with positive and negative poles - cathode and anode) spaced apart from one another by a separator layer, which is designed to avoid possible short circuits and in particular, to be impregnated with an electrolyte.

In recent years, different winding apparatuses for the production of electric energy storage devices were developed. In these apparatuses, the electrodes and the separator are usually wound around a core with an oblong, non-circular shape, so that the movement of the incoming material usually is inconstant and not homogeneous due to the lack of circularity of the core.

Different compensating systems were suggested in order to make the movement of the material fed to the winding apparatuses more constant and homogeneous.

Document WO 2018146638 describes an apparatus provided with crank means and designed to regulate the feeding and the winding of a material band in a uniform manner.

The material band to be wound typically comprises electrodes arranged at predefined distances (in particular, progressive distances) so as to allow the electrodes to be correctly positioned, in a stacked manner, during the winding; namely, so that the electrodes face one another along the largest surface available, in particular also aligning the end tabs.

In order to ensure and preserve the position of the electrodes during the winding, namely in order to avoid misalignments of the electrodes to be stacked due to the jolts generated during the winding, the electrodes and at least one continuous separator layer are rolled, so as to make them integral to the separator, hence ensuring a steady adhesion.

However, the rolling process weakens (by compressing and heating the separator, which usually is porous) the separator, thus favouring possible short circuits caused by the formation of metal (in particular, lithium) dendrites, which go through the separator creating an electric connection from two electrodes with opposite poles, hence generating a short circuit inside the battery.

Furthermore, in known winding apparatuses, it often is hard to significantly increase the winding speed, as the generated air flows could jeopardize the good alignment of the material to be wound both crosswise and longitudinally (for example, because of the elasticity of the separator).

In recent years, manufacturers tried to solve this problem by using winding apparatuses compensating, both vertically and horizontally, for the non-circular shape of the core, attempting to keep the material band feeding speed substantially constant. However, these solutions do not allow the winding speed to be further increased, the formation of dendrites to be reduced and, therefore, the safety of the battery to be increased.

Furthermore, known support methods to introduce material towards the winding apparatus suffer from numerous drawbacks, since, in order not to interfere with the rotation of the winding apparatus, the material is usually supported in a fixed manner until it gets close to the apparatus, hence leaving the material hanging for the last centimetres, exploiting the prior rolling to preserve the position of the electrodes.

US 2013/248636 describes a winding device of the prior art.

The object of the invention is to provide a winding apparatus, a machine and a relative method for the production of electric energy storage devices, which are designed to at least partially overcome the drawbacks of the prior art and, at the same time, are economic and easy to be manufactured.

SUMMARY

According to the invention, there are provided a support apparatus, a machine and a method for the production of electric energy storage devices according to the independent claims attached hereto and, preferably, according to any one of the dependent claims directly or indirectly depending on the independent claims.

The appended claims describe preferred embodiments of the invention and form an integral part of the description.

BRIEF DESCRIPTION OF THE DRAWINGS

The invention will now be described with reference to the accompanying drawings, which show some non-limiting embodiments thereof, wherein:

- figure 1 is a perspective view of a first part of an automatic machine for the production of storage devices comprising a first embodiment of a winding apparatus and a support apparatus;

- figure 2 is a schematic perspective view of the winding apparatus of figure 1;
- figure 3 is a schematic side view of the winding apparatus of figure 2;
- figure 4 is a schematic perspective view of a second embodiment of a winding apparatus;
- figure 5 is a side view of a second part of an automatic machine comprising a pair of opposite winding apparatuses;
- figure 6 is a schematic perspective view of a detail of a different embodiment of the second machine part of figure 5;
- figure 7 is a schematic perspective view of the support apparatus of figure 1;
- figure 8 is a schematic perspective view of a detail of the support apparatus of figure 7;
- figure 9 is a schematic front view of the different winding and support steps of a method for the production of storage devices;
- figure 10 is a schematic plan view of the steps of figure 9.

## DETAILED DESCRIPTION

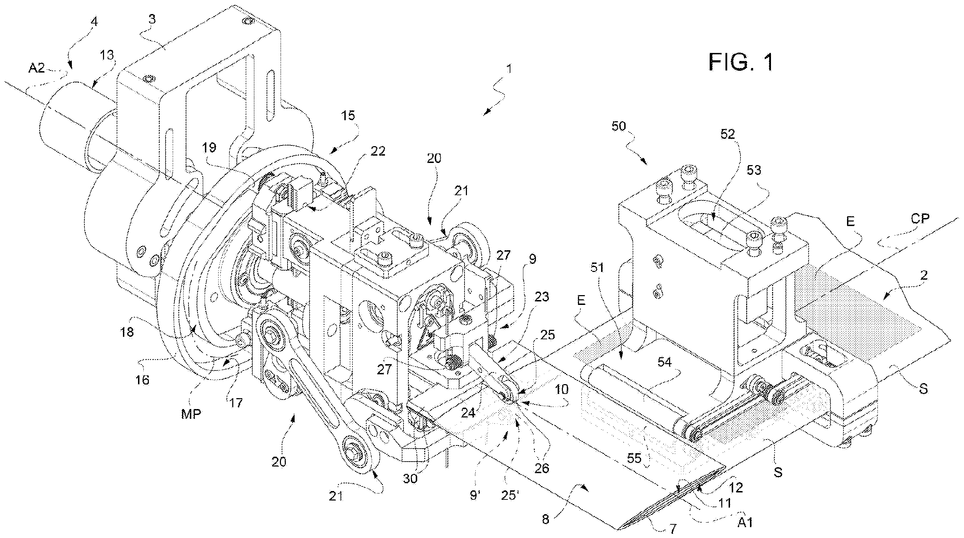

In figure 1, number 1 indicates, as a whole, a winding apparatus for the production of electric energy storage devices. In particular, the winding apparatus 1 is configured to wind at least one material 2 with a planar shape (for example, a band, a strip, a sheet, a film, etcetera). More precisely, the apparatus 1 is part of an automatic machine for the production of electric energy storage devices, in particular configured to produce rechargeable batteries (for example, lithium ion batteries, lithium metal batteries, etc.). Figure 1 shows a first part of said automatic machine.

Advantageously, though not necessarily and as schematically shown in figure 1, the material 2 is a multi-component material, in particular comprising at least one electrode E and/or at least one electrode separator S (which is known and, therefore, not further described in detail). More precisely, the material 2 comprises at least two electrode layers E and two separator layers S, respectively spaced out.

In some non-limiting embodiments, the material 2 comprises one or more continuous separator strips S, on which (and/or between which) there are arranged a plurality of (positive and/or negative) electrode blanks E. In particular, the material 2 comprises two continuous separator strips S, between which there are arranged a plurality of electrode blanks E with a same first (positive or negative) polarity. More precisely, in one of the (upper or lower) outer portions of the two separator layers S there are a plurality of electrode blanks E with a same second polarity, which is contrary to the first (negative or positive) one.

Advantageously, though not necessarily, the aforesaid automatic machine comprises a feeding system (not shown herein, for example of a known type), which is configured to feed (in particular, at least partially at a constant speed) the material 2 to be wound along a feeding plane FP (more precisely, along the conveying path CP - figures 1, 3 and 7). In particular, said feeding means comprise an unwinding spool for each continuous layer (or discontinuous layer, if it is cut during the process) comprised in the material 2 (for example, two unwinding coils in case of two separators spaced apart by electrode blanks or four unwinding spools in case of two separator layers spaced apart by two continuous electrode layers with opposite polarity) or also one unwinding spool in case intermediate elements are used, such as halfcells (overlapping of one electrode layer with one separator layer), fullcells (overlapping of two electrodes with one separator between them), monocells (overlapping of two electrodes and two separators in an alternated manner) or bicells (overlapping of three electrodes and two separators in an alternated manner) or combinations thereof.

In the non-limiting embodiment of figures 1 to 3, the winding apparatus 1 comprises a support 3 and an actuator device 4.

Advantageously, though not necessarily, the support 3 comprises, on the inside, a series of variable-axis gears (not shown). Therefore, the winding of different formats is allowed by changing the position of the rotation axis of the gears.

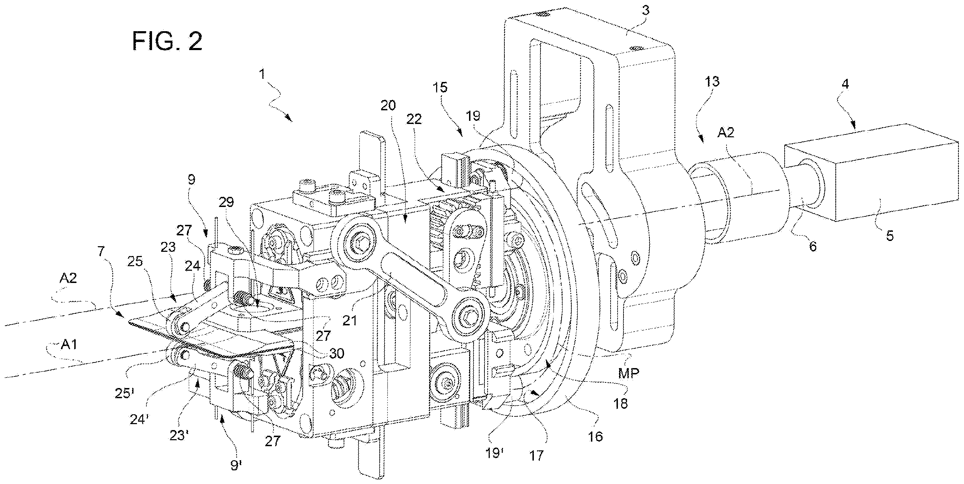

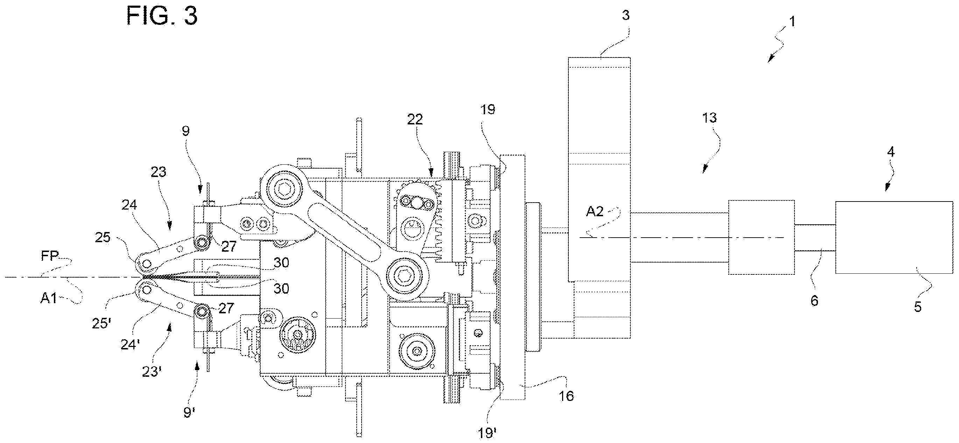

Advantageous, the winding apparatus 1 also comprises an actuator device 4, which comprises (figures 2 and 3), in turn, an electric motor 5 (for example, a brushless motor) and a motion transmission element 6. More precisely, the motion transmission element 6 is a transmission shaft.

According to the non-limiting embodiment of figure 1, the apparatus 1 further comprises a core 7 with an oblong shape, on which to wind the (multi-component) material 2 forming a winding 8 comprising a plurality of electrodes E (stacked on top of one another). The core 7 is arranged (mechanically mounted) in a rotary manner on board the support 3 and is (configured to be) operated by the actuator device 4 (namely, by the motor 5 through the transmission element 6) so as to rotate around a rotation axis A1.

Advantageously, though not necessarily, the motion transmission element 6 is configured to transmit at least part of the motion of the electric motor 5 to the core 7.

Is some non-limiting cases, the core 7 consists of a flat (metal) pin. In particular, said rigid pin has flat profile, in particular with rounded edges, so as to accompany the winding of the material 2 without damaging it because of the sharp edges.

In other non-limiting cases, the core 7 consist of the first cell (namely, of the unit comprising the first electrode blank E along the conveying path CP) of a strip, namely the quantity of material 2 needed to form a complete winding for the production, for example, of a battery. The following cells are wound around the first one in order to form the complete winding 8. In this way, the metal pin does not have to be removed during the production process; this operation generally involves the risk of damaging the final product.

Obviously, the core 7 can have any shape (polyhedral, elliptical, oval, polyhedral, laminar shape, etc.) capable of allowing the winding to be performed.

Advantageously, the apparatus 1 comprises (at least) one holding element 9, 9', which is configured to assume, during the winding:

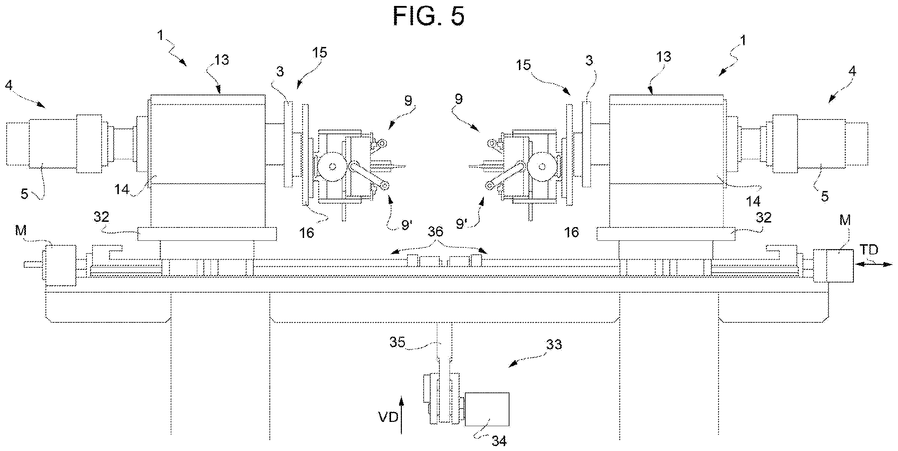

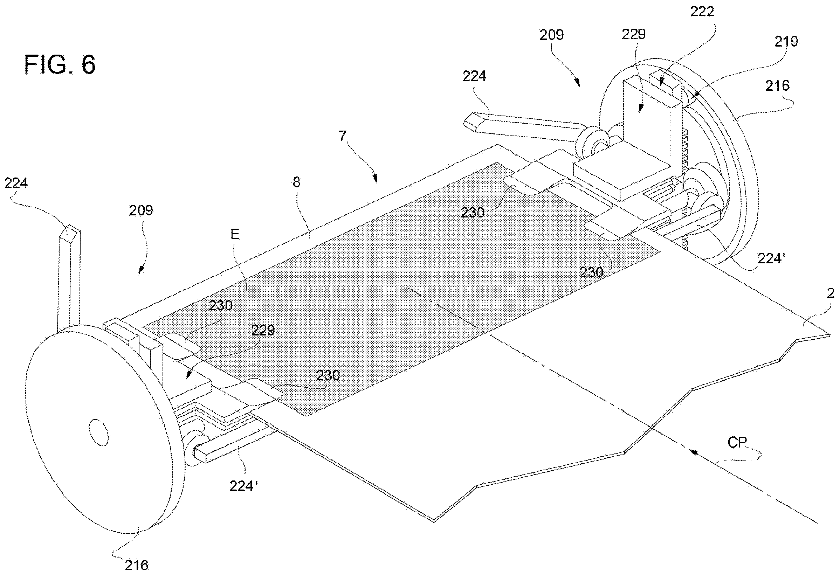

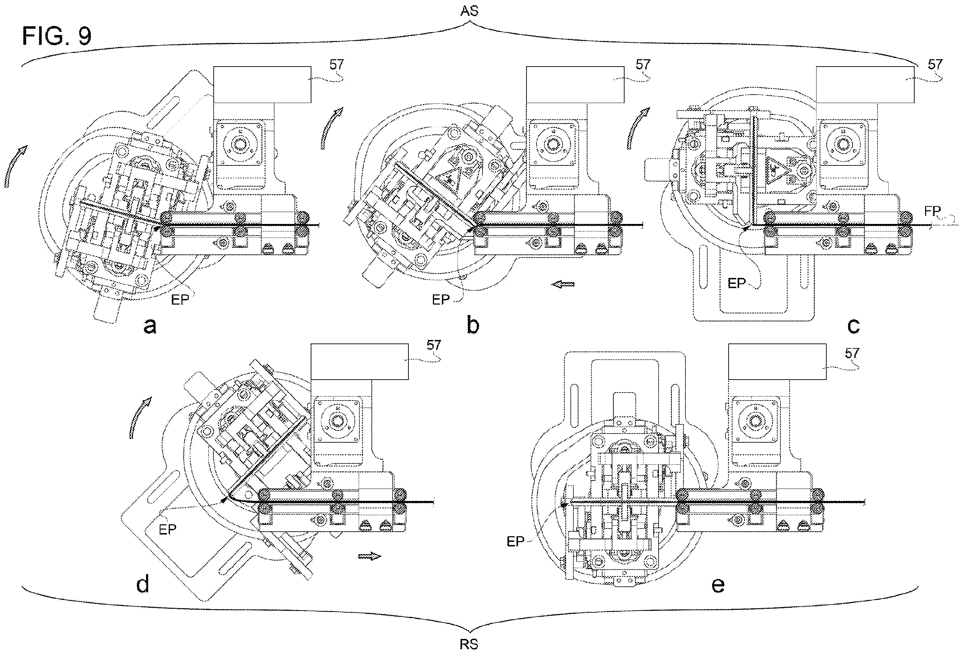

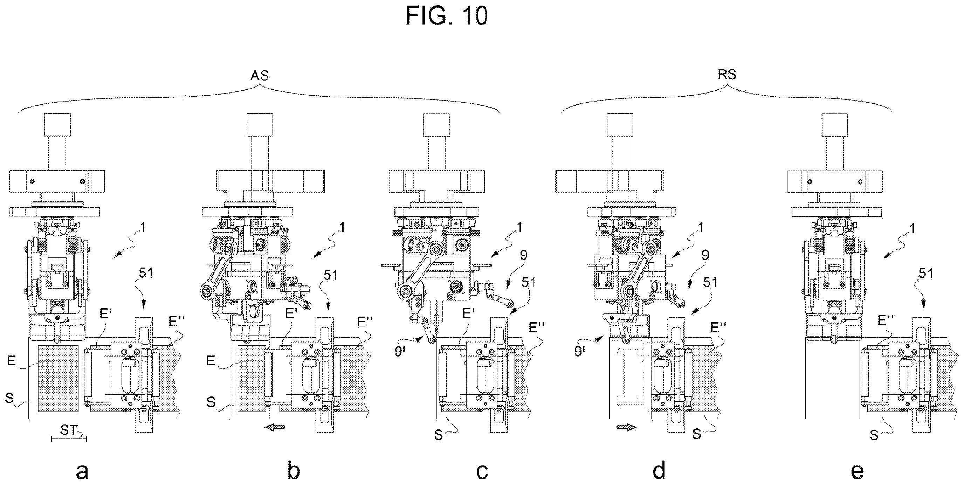

- at least a closing configuration (shown, for example, in the non-limiting embodiments of figures 1 to 3), in which the holding element 9, 9' holds at least a portion 10 of material 2 (in particular, of separator S - or of electrode E) in contact with the winding 8, thus avoiding relative movements between the portion 10 of material 2 and a side surface 11 (shown a the top in figure 1 and opposite a surface 12 shown at the bottom in figure 1; these surfaces being interchangeable) of the core 7; and
- an opening configuration (shown, for example, in figure 5, in figure 6 and in steps b, c and d of figures 9 and 10), in which the holding element 9 allows the material 2 to be wound on the surface 11 (or on the surface 12) of the core 7.

In other words, during the closing configuration, the holding element 9, 9' is in contact with and supports the outer layer of the winding 8 so as to avoid undesired movements of the electrodes E on the inside of the latter (especially if they are not rolled on the separator S); whereas, in the opening configuration, the holding element 9, 9' moves away (namely, is configured to move away) from the winding 8 (in particular, radially from the rotation axis A1), thus allowing a further layer of material 2 to be wound around the core 7 in order to complete the winding 8.

Advantageously, though not necessarily, in the closing configuration, the holding element 9, 9' is configured to push the portion 10 of material towards (against) the side surface 11, 12 of the core 7 (namely, towards the core 7).

In the non-limiting embodiment of figures 1-3 and 7, the winding apparatus 1 also comprises an actuator device 13, which is configured to cause the support 3 to rotate around a rotation axis A2, which, in particular, is (different from and) parallel to the rotation axis A1. In particular, the support 3 is mechanically connected to the actuator device 13.

In the non-limiting embodiment of figure 5, the actuator device 13 comprises an electric motor, in particular a torque motor (in other words, a motor with a large number of poles, which does not need a reduction gear for the transmission of the motion). More precisely, the actuator device 13 is a torque motor with through rotor (namely perforated from side to side).

Advantageously, the transmission element 6 at least partially goes through (in particular from side to side) a rotor of the actuator device 13. In this way, the motion of the actuator device 4 (namely, of the motor 5) can be transmitted into the support 3, in particular to the core 7.

Advantageously, though not necessarily, the transmission element 6 and the rotor of the actuator device 13 are coaxial to one another, in particular are concentric.

Advantageously, though not necessarily, the actuator device 4 and the second actuator device 13 are configured to be moved independently of one another. In particular, the automatic machine (or the apparatus 1) comprises at least one control unit, which is configured to control the actuator devices 4 and 13 independently of one another. More precisely, the control unit controls the actuator devices 4 and 13 by means of electronic cams, for example based on the position of a virtual master axis.

In the non-limiting embodiment of figures 1 to 3, the support 3 is configured to rotate around the axis A2 and the core 7 is configured to rotate around an axis A1. In particular, the axis A1 and the axis A2 are not coaxial to one another. More in particular, the axis A1 and the axis A2 are parallel to one another. In detail, the axis A1 and the axis A2 are perpendicular to the conveying path CP and are parallel to the feeding plane FP.

Advantageously, though not necessarily and according to the non-limiting embodiments of figures 1 to 3, the support 3 is asymmetrical. More precisely, it has a greater volume for the support of the core 7, namely in the area of the rotation axis A1.

In this way, the total mass of the support 3 can be reduced. In particular, the support 3 comprises a counter-mass, which is arranged in a position opposite the axis A1 relative to the axis A2. The counter-mass has the function of balancing the inertia of the support 7 and of avoiding those vibrations that would be generated by the asymmetrical distribution of the mass (avoiding said vibrations obviously leads to a reduction of wear).

Advantageously, though not necessarily, the core 7 is mechanically coupled to the support 3 (mounted on, supported or held by it) in such a way that it can make an orbital winding movement. In particular, "orbital movement" indicates that the core 7 is configured to make a rotation movement and a revolution movement. In the non limiting embodiment of figures 1-3 and 7, the actuator device 13 moves (the support 3 and, hence,) the core 7 around the axis A2, thus determining the revolution movement of the core 7 around said axis. In the non limiting embodiment of figures 1-3 and 7, the actuator device 4 moves the core 7 around the axis A1, thus determining the rotation movement of the core 7 around said axis.

Therefore, the orbital movement with which the core 7 is moved comprises a rotation around the axis A1 and a revolution around the axis A2, which, in use, are (always) parallel to one another.

Advantageously, though not necessarily, the apparatus 1 also comprises an actuator device 15, which is configured to operate the holding element or elements 9, 9'.

In the non limiting embodiments of figures 1 to 6, the actuator device 15 comprises at least one mechanical cam 16. In particular, the mechanical cam 16 comprises (namely, determines) a motion profile MP (which preferably is closed and continuous) arranged along a plane which is transverse (substantially perpendicular) to the rotation axis A1. More precisely, the mechanical cam 16 is crossed by the rotation axis A2 crosswise, in particular at the centre. In the non-limiting embodiments of the accompanying figures, the mechanical cam 16 comprises an inner profile 17 and an outer profile 18, which delimit the motion profile MP (which is engraved on the mechanical cam itself).

Advantageously, though not necessarily, the actuator device 15 further comprises at least one cam follower 19 and a motion transmission system 20, which is configured to at least partially transmit the motion (more precisely, the radial displacement from the rotation axis A1) of the cam follower 19 to said one or more holding elements 9, 9'. In use, the cam follower 19 slides in a space comprised between the inner profile 17 and the outer profile 18, namely the cam follower 19 runs along the motion profile MP.

In some non-limiting cases which are not shown herein, in order to fulfil more adjustment needs, the actuator device 15 comprises at least one cam 16 comprising, in turn, a plurality of profiles followed by at least one respective cam follower.

Advantageously, though not necessarily, the (radial) variation of the motion profile MP determines the movement of each holding element 9, 9'. In other words, the opening and the closing of the holding element 9, 9' is determined by the deviation of the motion profile MP from a profile with a circular shape.

According to some embodiments which are not shown herein, the actuator system 15 comprises at least one motor and/or at least one pneumatic utility.

Advantageously, though not necessarily and according to the non-limiting embodiment of figures 1 to 3, the motion transmission system 20 comprises crank mechanisms 21 (arms, pulleys, etc. - or kinematic mechanisms). Furthermore, the motion transmission system 20 comprises a transmission element 22, which is configured to turn the radial linear movement of the cam follower 19 into a rotary movement (for example, a rack and pinion system, like the ones shown in figures 1-4 and 6).

Advantageously, though not necessarily and according to the non-limiting embodiments of the accompanying figures, the apparatus 1 comprises two holding elements 9, 9', which are arranged on opposite sides relative to the core 7.

In particular, the holding element 9 faces the side surface 11 of the core 7, whereas the holding element 9' faces the side surface 12 of the core 7.

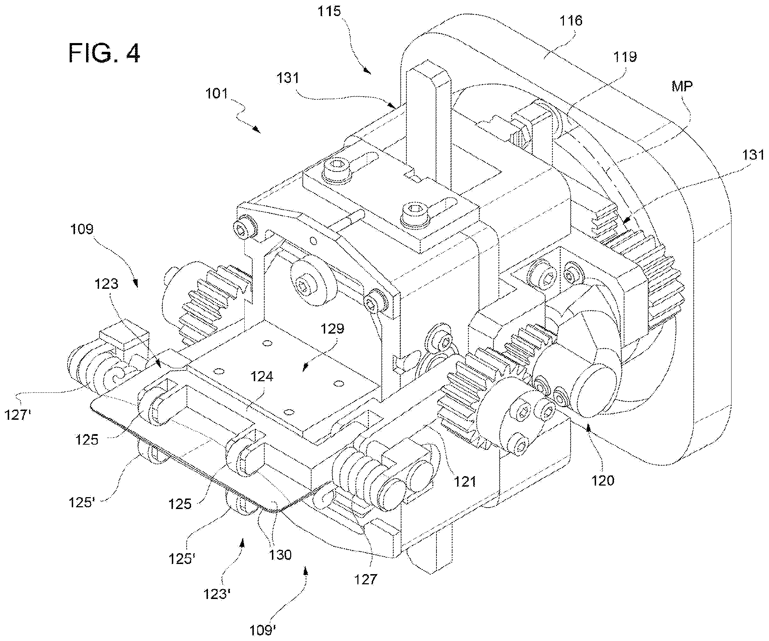

In the non-limiting embodiments of figures 4 and 6, the elements having a corresponding element in the embodiment of figure 1 are indicated with the same number, to which 100 and 200 were added, respectively. In other words, the cam 16 is indicated with 116 in the embodiment of figure 4 and with 216 in the embodiment of figure 6 (in compliance with the other references). All observations made for the embodiment of figures 1 to 3 also apply, mutatis mutandis, to the embodiments of figures 4 and 6.

In some non-limiting cases, like the ones shown in figures 1 to 3, the holding elements 9 and 9' are configured to be operated independently of one another, in particular by means of an actuator device 15, more precisely comprising the mechanical cam 16 and a cam follower 19, 19' (figure 2) for each holding element 9, 9'. In particular, the cam followers 19, 19' are arranged, in use, on opposite sides of the cam 16, namely on opposite sides of the rotation axis A1. In these cases, each one of the holding elements 9, 9' is moved by the respective cam follower 19, 19' through respective crank mechanisms 21 and respective transmission elements 22.

In other non-limiting cases, likes the ones shown in figures 4 and 6, the holding elements 109, 209 and 109', 209' are configured to be operated in an opposite manner, which means so that the closing configuration of one of the holding elements (for example, the element 9) corresponds to the opening configuration of the opposite holding element (for example, the element 9') and vice versa. In particular, the elements 109, 209 and 109', 209' can be operated by means of the actuator device 115, 215, more precisely comprising the mechanical cam 116, 216 and one single cam follower 119, 219 (figure 4 or 6) for both holding elements 109, 209 or 109', 209'. In particular, each apparatus 1 comprises one single transmission element 131, 222 (as a replacement for the elements 22) provided with two racks and two pinions arranged on opposite sides relative to the axis A1. In these cases, each pair of holding elements 109 and 109' or 209 and 209' is moved by the respective cam follower 119, 219' through respective kinematic mechanisms 121 and/or respective transmission elements 131, 222.

Advantageously, though not necessarily and according to the non-limiting embodiments of the accompanying figures, each holding element 9, 9' comprises at least one distal element 23, 23'.

In the non-limiting embodiments of figures 1 to 3, each distal element 23, 23' comprises, in turn, at least an arm 24, 24' and a contact component 25, 25', which is arranged in an end portion of the distal element 23, 23', namely in the area of the winding 8. Each contact component 25, 25' is configured to push, in the closing configuration of the holding element 9, 9', the portion 10 of material 2 towards the core 7 (in particular, towards the side surface 11 or 12). In particular, the contact component 25, 25' is a roller 26 (figure 1) configured to roll on the portion 10 of material 2, which corresponds to the outer part of the winding 8. In this way, a particularly fragile or thin material 2 is prevented from being damaged because of a pressure with a high degree of friction during the contact. More in particular, the holding element 9, 9' further comprises an elastic device 27 (for example, a spring), which is configured to at least partially adjust the pressure with which the contact component 25, 25' pushes the portion 10 of material and/or to compensate for the increase in the thickness of the winding 8 due to the winding of the material 2.

In some non-limiting cases, like the one shown in the embodiment of figure 4, each holding element 109, 109' comprises a plurality of distal elements 123, 123', in particular configured to be simultaneously moved by the actuator device 15. In other non-limiting cases which are not shown herein, the distal elements belonging to a same holding element are configured to be moved in a timely different manner relative to one another, so as to progressively hold the material 2 forming the outer layer of the winding 8, in particular as the material 2 wraps the core 7.

According to a non-limiting embodiment, the wrapping apparatus 1 comprises a grabbing device 29, which is configured to grab the core 7 during the winding and release it once the winding 8 is complete. In particular, according to the non-limiting embodiment of figures 1 to 3, the grabbing device 29 comprises grabbing elements 30 having an end (opposite the support 3) with small dimensions, preferably, though not necessarily, decreasing dimensions (more precisely, below five millimetres, in particular smaller than one millimetres). In this way, the grabbing elements 30 can easily be extracted from a complete winding 8.

Obviously, the grabbing elements can assume different conformations, for example they can have discontinuities, as shown in the embodiment of figure 6, so as to reduce friction in releasing of the core 7 once the winding 8 is complete.

Advantageously, though not necessarily, the apparatus 1 comprises a suitable actuator system to move the grabbing elements, in particular a pneumatic utility. More precisely, the grabbing elements 30 are moved vertically (namely, perpendicularly to the feeding plane FP) in order to open and close depending on the step of the winding process. More precisely, the elements 20 are spaced apart from one another, namely open, in the product feeding step, namely upon completion of a winding 8, so as to release the complete winding 8 and receive a new core 7 (for example, the first cell of a strip, as shown in figure 6), whereas they are closed from the beginning to the end of the actual winding step (during which the core 7 rotates).

The non-limiting embodiment of figure 5 shows a second part of an automatic machine for the production of electric energy storage devices. In particular, said part comprises a pair of opposite winding apparatuses 1.

Advantageously, though not necessarily, the material 2 is wound by means of the two apparatuses 1 arranged in a mirror-like manner relative to one another, so as to guide (in particular, so as to grab with the grabbing elements) the core 7 from both sides, especially in case it is the first cell of a strip.

Advantageously, though not necessarily, said apparatuses each comprise a frame 32, which supports the respective actuator device 13 (namely, the torque motor 14).

Advantageously, though not necessarily and according to the non-limiting embodiment of figure 5, the apparatus 1 comprises (each one or in pair with an opposite apparatus) an actuator device 33, which is configured to move the frame 32 along at least a vertical direction VD, which, in particular, is transverse (perpendicular) to the feeding plane FP (and to the conveying path CP). In this way, the accumulation of material 2 wound around the core 7 can be compensated during the winding. In other words, during the winding, the thickness of the winding 8 constantly increases with each half-turn of the core 7 (in particular, increases by the thickness of the material 2) and, therefore, the actuator device 22 compensates for this increase by holding the incoming material 2 on the feeding plane FP (in particular, by keeping an entry point EP on the feeding plane FP). More precisely, the actuator device 33 comprises a lifting system 35 (for example, a rack and pinion system), which is configured to move the frame 32 in the vertical direction VD.

Advantageously, though not necessarily and according to the non-limiting embodiment of figure 5, the apparatus 1 comprises (each one or in pair with an opposite apparatus) an actuator device 36, which is configured to move the frame 32 along at least a transverse direction TD, which, in particular, is perpendicular to the conveying path CP and substantially parallel to the feeding plane FP. For example, the actuator device 36 comprises an electric motor M and a worm screw to transform the rotary motion of the motor M into a linear movement. In this way, the grabbing elements can be extracted once the winding 8 is complete, thus also allowing the apparatus 1 to be adjustable for a change in the width of the format to be produced.

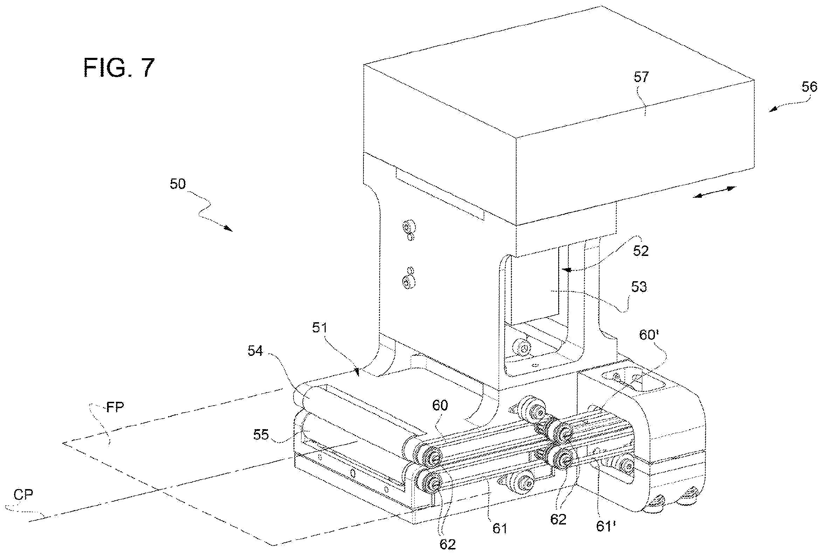

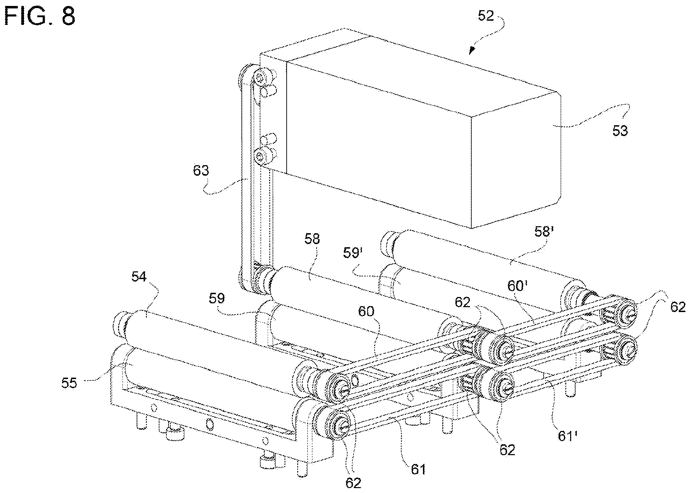

Advantageously, though not necessarily and according to the non-limiting embodiment of figure 1 and of figures 9 and 10, the machine for the production of electric energy storage devices comprises a support apparatus 50 (which is shown by itself and in detail in figures 7 and 8).

According to the non-limiting embodiment of figures 1, 7 and 8, the support apparatus 50 comprises a support element 51, which is linearly movable along the conveying path CP (namely, along the feeding plane FP) through which the material 2 (to be wound) is fed (in particular, at a constant speed) and is configured to move in an intermittent manner along a predefined stroke ST (figure 10) supporting the material 2 in a continuous manner.

Advantageously, though not necessarily, the support apparatus 50 further comprises an actuator device 52, in particular comprising an electric motor 53, for example a brushless motor. In particular, in the non-limiting embodiment of figures 7 and 8, the electric motor 53 is arranged (mounted) on board the support element 51.

In the non-limiting embodiment of figures 7 and 8, the support apparatus 50 comprises a roller 54, which is mounted on board said support element 51 and is configured to be caused to rotate at a variable speed by the actuator system 52 (namely, by the electric motor 53).

The apparatus 50 further comprises a roller 55, which is opposite the roller 54 and is arranged on the opposite side relative to the conveying path CP (and to the feeding plane FP) so as to cause the material 2 to pass between the roller 54 and the roller 55.

Advantageously, though not necessarily, the actuator system 52 (namely, the electric motor 53) is configured to change the speed a least of the roller 54 compensating for the intermittent movement of the support element 51 and substantially preserving a (pure) rolling condition between the roller 54 and the material 2, in other words avoiding slips between the roller 54 and the material 2.

Advantageously, though not necessarily, the support apparatus 50 further comprises an actuator device 56, which is configured to operate the support element 51 in an intermittent manner along the predefined stroke ST.

According to some non-limiting embodiments, like the one shown in figure 7, the actuator system 56 comprises a linear electric motor 57, which is configured to move the support element along the predefined stroke ST.

According to other non-limiting embodiments which are not shown herein, the actuator system 56 comprises a hydraulic cylinder, a pneumatic cylinder, an electric-hydraulic cylinder, a worm screw or other linear moving systems.

Advantageously, though not necessarily, the roller 54 and the roller 55 are vertically arranged one above the other.

In particular, the roller 54 and the roller 55 are in a distal position projecting from the rest of the support apparatus 50. In this way, the material can be supported up to close to the core 7 even during the winding (during which the core 7 rotates).

In the non-limiting embodiment of figures 7 and 8, the support apparatus 50 also comprises a roller 58 and a roller 59, which is opposite the roller 58. In particular, the roller 54 and the roller 58 are connected to one another by an (oblong) motion transmission element 60, in particular a belt or a chain. More in particular, the roller 55 and the roller 59 are connected to one another by an (oblong) motion transmission element 61, in particular a belt or a chain.

In some non-limiting cases, the roller 54 and the roller 55 are configured to move at the same speed, as they are connected by a motion transmission system. In particular, the roller 54 and the roller 55 move in opposite directions in order to allow the material to slide between them without jamming and minimizing friction.

In other non-limiting cases, like the one shown in figure 8, the roller 55, namely the roller arranged on the side of the material 2 whose outer layer comprises a continuous separator, is an idler roller.

Advantageously, though not necessarily, the roller 54 and the roller 55 (just like the roller 58 and the roller 59) have the same size, in particular smaller than 20 mm, more precisely smaller than 15 mm, more in particular smaller than 8 mm. In this way, the support apparatus manages to get close to the rotating core 7 having the time to retract with every half-turn of said core, in particular continuing to support the material 2 to be wound.

In the non-limiting embodiment of figure 8, the support apparatus 50 comprises a further pair of rollers 58' and 59', in particular connected to the rollers 58 and 59.

Advantageously, though not necessarily, all rollers 54, 55, 58, 59, 58' and 59' have the same size. In this way, they can easily be connected by means of the motion transmission elements 60, 61, 60', 61', such as, for example, chains and belts. The rollers 54, 55, 58, 59, 58' and 59' are moved through the action of the motion transmission elements 60, 61, 60', 61' on pulleys 62 (in particular, toothed pulleys), which are configured to ensure a synchronous movement of the rollers arranged on the same side of the material 2 or of all rollers. In particular, the bushings 62 are fitted on a central shaft of the rollers 54, 55, 58, 59, 58' and 59'.

In the non-limiting embodiment of figure 8, the support apparatus comprises a motion transmission element 63 (for example, a belt) of the actuator system 52, namely from the electric motor 53 to the roller 58 (opposite the roller 59), which is arranged in a retracted position of the support apparatus 50 relative to the roller 54 arranged in a distal position.

According to a further aspect of the invention, there is provided a method for the production of electric energy storage devices using a winding apparatus 1 as disclosed above and/or a support apparatus 50 as disclosed above.

In some non-limiting cases, the method comprises a feeding step, during which a feeding system as disclosed above feeds the material 2 towards the winding apparatus 1.

Advantageously, though not necessarily, the method comprises a winding step, during which the (multi-component) material 2 is wound on the core 7 with an oblong shape in order to form the winding 8 comprising a plurality of electrodes E stacked on top of one another.

In particular, the method comprises a closing step, during which at least one holding element 9, 9' is in the closing configuration and holds at least a portion 10 of material 2 in contact with the rest of the winding 8, thus avoiding relative movements between the portion 10 of material and the side surface 11 or 12 of the core 7. More precisely, the method also comprises an opening, step, during which the holding element 9, 9' is in the opening configuration and allows the material 2 to be wound on the first side surface 11 or 12 of the core 7.

Advantageously, though not necessarily, the closing step and the opening step are at least partially simultaneous with the winding step. In particular, the closing step compensates for the fact that the material 2 was not previously rolled and, hence, the electrodes E are not integral to the separator S. More precisely, during the closing step, the element 9, 9' supports the material 2 that just entered the winding 8, thus preventing the electrode lying on it from moving in an undesired manner.

The non-limiting embodiment of figures 9 and 10 shows a sequence a-e of the positions assumed by the winding apparatus 1 and by the support apparatus 50 during a half-turn of the core 7. In particular, during this half-turn of the core, a quantity of material 2 is wound around the core 7, which is equal to the width of the winding 8 along the conveying path CP when the winding 8 is in a position parallel to the feeding plane FP.

Advantageously, though not necessarily, during a whole turn of the core 7 around the axis A1, both the opening step and the closing step are at least partially (in particular, completely) carried out. In particular, according to the sequences of figure 9 and 10, during a half-turn of the core 7 around the axis A1, both the opening step and the closing step are at least partially (in particular, completely) carried out.

Advantageously, though not necessarily, during the feeding step, the feeding system feeds the material 2 along the feeding plane FP, in particular at a speed $V_M$.

Advantageously, though not necessarily, the method further comprises a supporting step comprising, in turn, an accompanying sub-step AS, during which the support apparatus 50, which is moved by means of the actuator system 56 at a second speed $V_S$, supports the material along the feeding plane FP until it gets close to the core 7. In particular, by "close to" we mean, in this case, that the distance between the support apparatus 50 (in particular, the roller 54) and the core 7 is smaller than 80 mm, more precisely smaller than 50 mm, in detail smaller than 20 mm.

Advantageously, though not necessarily, the distance between the support apparatus 50 (in particular, the roller 54) and the core 7 is variable, in particular is varied by the angular position of the core 7.

Advantageously, though not necessarily, the support step also comprises a recovery sub-step RS, during which the support apparatus 50 steps back (along the conveying path CP) avoiding a collision with the rotating core 7. More precisely, the support apparatus 50 is moved in an intermittent manner by the (linear) motor 57 supporting each electrode E or each (mono-, half-, full-, bi-) cell comprising several electrodes E.

In particular, the distal portion of the support apparatus 50 comprising the rollers 54 and 55 moves into and out of the workspace of the core 7 supporting the electrodes to be introduced into the winding so as to maintain their relative position in relation to the material 2 (in particular, to the separator S). The term "workspace" indicates the set of points (for example, the volume) occupied by an object, in this case by the core 7, during the operations it carries out (for example, the aforesaid orbital movement). In other words, the "workspace" is the space volume within which the object works.

Advantageously, though not necessarily, the roller 54 (together with the roller 58 and 58' by means of the transmission elements 60 and 60') is operated by the actuator system 52 (namely, by the electric motor 53) so as to move at a speed $V_R$.

According to some preferred non-limiting embodiments, the speed $V_S$ and the speed $V_R$ are (at least partially) variable, whereas, in particular, the speed VM is (at least partially) constant. More precisely, the speed $V_R$ of the roller 54 and of those connected thereto changes between the accompanying sub-step AS and the recovery sub-step RS. According to some non-limiting embodiments, this change comprises a change of direction.

According to some preferred, though non-limiting embodiments, the speed $V_R$ at which the roller 54 (and the rollers connected thereto) are controlled by the actuator system 52 corresponds to the difference between the speed $V_M$ of the material 2 and the speed $V_S$ of the support apparatus 50 along the conveying path CP. In particular, according to these embodiment, the speed $V_R$ of the roller 54 is the tangential speed of the roller 54, namely, the angular speed $\omega$ of said roller 54 multiplied by the radius R of the roller 54.

More precisely, said speed can be expressed by the following formula:

$$V_R = V_M - V_S$$

wherein

$$V_R = \omega R$$

In this way, it is possible to compensate for the intermittent movement of the support apparatus 50 along the conveying path holding the rollers 54, 55 (and the ones connected thereto) in contact with the material 2 without damaging the material 2 itself. In other words, relative to an inertial reference system, the tangential speed $V_R$ of the roller 54 always is substantially equal to the speed $V_M$ of the material 2. In this way, it is possible to preserve a substantial pure rolling state between the material and the roller 54, which, in particular, comes into contact with the electrodes E. Therefore, the roller 54 is prevented from slipping on the material 2, thus risking damaging it, for example generating grooves on the coating of the electrodes E (generally comprising compressed powders).

In some non-limiting cases, during at least part of the accompanying sub-step AS, the roller 54 and the rollers connected thereto stand still. In particular, taking into account the equations described above, this occurs when the support apparatus 50 and the material 2 have the same speed.

Advantageously, though not necessarily and according to figures 9 and 10, the winding step comprises a first sub-step (shown in steps a, b and c of the sequence of figures 9 and 10), during which the core 7 is moved from a horizontal position (step a) parallel to the feeding plane FP to a vertical position (step c), in particular substantially perpendicular to the feeding plane FP.

In particular, the winding step comprises a second sub-step (shown in steps c, d and e of figures 9 and 10), during which the core 7 is moved from the vertical position (step c) to the horizontal position (step e), in particular substantially on the feeding plane FP. More precisely, the first and the second step divide into two a half-turn of the core 7 during the winding step.

In some non-limiting cases, the accompanying step AS is at least partially, in particular totally, simultaneous with the first sub-step. In this way, the support apparatus 50 supports the material 2 holding the electrodes E in position despite the moving away of an entry point EP in which the material enters the winding 8.

According to some non-limiting embodiments, the recovery step RS is at least partially, in particular entirely, simultaneous with the second sub-step. In this way, the support apparatus 50 supports the material 2 holding the electrodes E in position for as long as possible before moving back avoiding a potential contact with the winding 8, which would risk ruining it.

In particular, during at least part of the winding step, the support apparatus is in a position, on the feeding plane, at risk of hitting the core 7.

Advantageously, though not necessarily and according to the non-limiting embodiment of figure 10, the holding element 9, 9', during the opening step, moves away from the winding 8 in order to avoid hitting the support apparatus 50, as clearly shown in steps b, c and d of figure 10.

Advantageously, though not necessarily and according to the non-limiting embodiment of figures 9 and 10, a complete cycle of the rotation movement (namely, a complete rotation of the core 7 around the axis A1) corresponds to two half-cycles of the revolution movement (namely, to a complete rotation of the support 3 around the axis A2). In this way, the entry point EP of the material 2 around the core 7 can be kept at a constant height, namely on the feeding plane FP, as shown in figure 9.

In particular, a complete cycle of the rotation movement of the core corresponds to two accompanying steps and two recovery steps.

Advantageously, though not necessarily, the control unit (which is of a known type and is not shown herein) is configured to control the winding apparatus 1 and the support apparatus 50 in a combined manner. In this way, the material 2 can be supported (thus avoiding positions other than the desired ones) for the greatest part of the process of laying the electrodes E on the separator S upon winding, following which the electrodes E generally are steadily anchored to the separator due to the tension with which the material is wound around the core 7 in order to form the winding 8.

In particular, the method relates to the winding of at least one electrode and/or at least one separator. More precisely, the method relates to the winding of two electrode layers (or series of cells) with a different polarity (anode and cathode) spaced apart by two separator layers.

Advantageously, though not necessarily, the closing step of the holding element 9, 9', to which an electrode E introduced into winding 8 is subjected, is at least partially simultaneous with the accompanying step AS, to which the electrode E itself is subjected. In other words, according to step e of figure 9, the (lower) holding element 9' closes, namely comes into contact with the winding 8, basically while (or before) the electrode E is completely released by the support apparatus 50, namely gets out of the rollers 54 and 55 in the distal portion.

Is use, the material 2 is fed to the apparatus 1 in the form of a band, which is divided into strips with a desired length, which are configured to be wound around the core 7. In particular, the core 7 rotates both around the axis A1 and around the axis A2 making the aforesaid orbital movement. During said orbital movement generated by the actuator devices 4 and 13, the material 2 is preferably pulled with a constant speed and tension at the entry point EP. In particular, in order to allow the point EP to remain on the feeding plane FP, each half-turn of the core around the axis A1 corresponds to a whole turn of the support 9 around the axis A2.

During these rotations, the actuator device 33 moves the frame 3 along the direction VD, in particular by a distance that is equal to the thickness of the material 2 every half-turn of the core 7. Once the winding is complete, namely after a given number of half-turns of the core 7, the actuator devices 4 and 13 stop, the material 2 is cut, the winding 8 is closed, preferably by means of adhesive tape or glue, and is conveyed to a known discharge device which is not shown herein (in particular, after having opened the grabbing elements and released the winding 8).

During the aforesaid rotations, the support apparatus 50 operates in a coordinated manner with the winding apparatus 1, moving in an intermittent manner in order to support each electrode E entering the winding 8 avoiding undesired movements of said electrode E. In particular, the support apparatus 50 tries to keep the distance between the roller 54 and the core 7 at a constant value, or anyway below 25 mm. At the same time, the actuator system 52 prevents the roller 54 and the rollers 58, 58' connected thereto from ruining the electrodes E or the material 2 due to a relative sliding, changing the speed $V_R$ so as to compensate for the intermittent movement of the support element along the stroke ST.

Even though the invention described above makes particular reference to a precise example of application, it should not be deemed as limited to said example of application, for its scope of protection also encompasses all those variants, changes or simplifications that are covered by the appended claims, such as for example a different geometry or composition of the core 7, a different type of actuator devices 4 and 13, 15, 33, 52, 56 or a different type of transmission elements, a different type of holding elements, etc..

The apparatuses, the machine and the method described above have many advantages.

First of all, they allow the material to be wound to be fed in a regular and uniform manner (regardless of whether it is a single- or multi-layer material) despite the fact that the winding core has a non-circular shape, thus reducing those oscillations that are typical for apparatuses with a flat core.

In addition, they allow for the winding of a non-rolled material 2 supporting the electrodes both during the introduction into the winding apparatus 1 and during the actual winding by means of the holding elements 9, 9'.

Furthermore, the variation of the speed $V_R$ described above allows the material 2 to be protected, preventing the rollers of the support apparatus scraping against it, in particular against the electrodes E.

A further advantage of the invention lies in the fact that the process is reinforced also in case of a rolled material, thus allowing for a greater control over the material during the winding.

Finally, the presence of a distal portion as well as the type of opening and closing movement of the holding elements and the intermittent movement of the support apparatus avoid collisions between the two apparatuses 1 and 50, which occupy the workspace shared by them in an alternate manner.

A non-limiting embodiment 1 relates to a winding apparatus 1 for the production of electric energy storage devices; the apparatus comprises: a support 3; a first actuator device 4; a core 7 with an oblong shape, on which to wind the material 2 forming a winding 8 comprising a plurality of electrodes E; said core 7 being arranged on said support 3 in a rotary manner and being configured so as to be caused to rotate around a first rotation axis A1 by the first actuator device 4;

the apparatus being characterized in that it comprises at least one holding element 9, 9', which is configured to assume, during part of the winding:

- at least a closing configuration, in which the holding element 9, 9' holds at least a portion 10 of material 2 a in contact with the winding 8, thus avoiding relative movements between the portion 10 of material 2 and a first side surface 11, 12 of the core 7; and
- an opening configuration, in which the holding element 9, 9' allows the material 2 to be wound on the first side surface 11, 12 of the core 7.

An embodiment 2 according embodiment 1, in the closing configuration, the holding element 9, 9' is configured to push the portion 10 of material 2 towards the side surface 11, 12 of the core 7.

An embodiment 3, according to any one of the preceding embodiments and comprising a second actuator device 13, which is configured to cause said support to rotate around a second rotation axis A2, in particular parallel to the first rotation axis A1.

An embodiment 4 according to any one of the preceding embodiments and comprising at least one third actuator device 15, which is configured to operate said at least one holding element 9, 9'.

An embodiment 5 according to claim 4, wherein the third actuator device 15 comprises at least one mechanical cam 16, in particular comprising a motion profile MP arranged along a plane, which is transverse to the first rotation axis A1, the third actuator device 15 further comprising at least one cam follower 19 and a motion transmission system to at least partially transmit the motion of cam follower 19 to said at least one holding element 9. 9'.

An embodiment 6 according to any one of the preceding embodiments and comprising at least a first holding element 9, 9' and a second holding element 9, 9', wherein the first holding element 9, 9' and the second holding element 9, 9' are opposite one another relative the core 7.

An embodiment 7 according to embodiment 6, wherein the first holding element 9, 9' and the second holding element 9, 9' are configured to be operated independently of one another, in particular by means of a third actuator device 15 comprising a mechanical cam 16 and a cam follower 19 for each holding element 9, 9'.

An embodiment 8 according to embodiment 6, wherein the first holding element 9, 9' and the second holding element 9, 9' are configured to be operated in an opposite manner, namely so that the closing configuration of one of the holding elements 9, 9' corresponds to the opening configuration of the opposite holding element 9. 9'.

An embodiment 9 according to any one of the preceding embodiments, wherein each holding element 9, 9' comprises at least one distal element 23 comprising, in turn, a contact component 25, 25' arranged in an end portion of the distal element 23, in the area of the winding 8, and being configured to push, in the closing configuration of the holding element 9, 9', the portion 10 of material 2 towards the core 7; in particular, the contact component is a roller 26 configured to roll on the portion 10 of material 2, which corresponds to the outer part of the winding 8; in particular, the holding element 9, 9' further comprises an elastic device 27, which is configured to at least partially adjust the pressure with which the contact component 25, 25' pushes the portion 10 of material 2.

An embodiment 10 according to embodiment 9, wherein each holding element 9, 9' comprises a plurality of distal elements, in particular configured to be simultaneously moved by a third actuator device 15 or to be moved in a timely different manner relative to one another.

In a non-limiting embodiment 11 there is provided a machine for the production of electric energy storage devices comprising an apparatus according to embodiments 1 to 10, a feeding system, which is configured to feed a material 2 to be wound along the conveying path CP; and a support apparatus 50; the support apparatus 50 comprising: a support element 51, which is linearly movable along the conveying path CP through which the material 2 to be wound is fed and is configured to move in an intermittent manner along a predefined stroke ST; an electric motor 53; a first roller 54, which is mounted on board said support element 51 and is configured to be caused to rotate at a variable speed by the first electric motor; a second roller 55, which is opposite the first roller 54 and is arranged on the opposite side relative to the conveying path CP so as to cause the material 2 to move between the first and the second roller 55; the electric motor 53 being configured to change the speed a least of the first roller 54 compensating for the intermittent movement of the support element 51, at least partially avoiding slips between the first roller 54 and the material 2.

In a non-limiting embodiment 12 there is provided a method for the production of electric energy storage devices; the method comprising: a winding step, during which a material 2 is wound 8 on a core 7 with an oblong shape to form a winding 8 comprising a plurality of electrodes E; a closing step, during which a holding element 9, 9' is in a closing configuration and holds at least a portion 10 of material 2 in contact with the rest of the winding 8, thus avoiding relative movements between the portion 10 of material 2 a first the side surface 11, 12 of the core 7; an opening, step, during which the holding element 9, 9' is in the opening configuration and allows the material 2 to be wound on the first side surface 11, 12 of the core 7.

An embodiment 13 according to claim 12, wherein the the closing step and the opening step are at least partially simultaneous with the winding step; in particular, the closing step compensates for the fact that the material 2 was not previously rolled.

An embodiment 14 according to embodiment 12 or 13, wherein, during a whole turn of the core 7, both the opening step and the closing step are at least partially carried out; in particular, during the opening step, the holding element 9, 9' moves away from the winding 8, thus avoiding creating an interference with the support apparatus 50.

An embodiment 15 according to any one of the embodiments from 12 to 14 and comprising a feeding step, during which at least one feeding system feeds the material 2.

An embodiment 16 according to any one of the embodiments from 12 to 15 and comprising an accompanying step AS, during which a support apparatus 50 supports the material 2 along a feeding plane FP until it gets close to the core 7; and a recovery step RS, during which the support apparatus 50 steps back avoiding a collision with the rotating core 7.

## Claims

1. A support apparatus (1) for the production of electric energy storage devices; the apparatus (1) comprises:

   - a support element (51), which is linearly movable along a feeding plane (FP), through which a material (2) is fed, and is configured to move in an intermittent manner along a predefined stroke supporting the material (2) in a continuous manner;
   - a first actuator system (52);
   - a second actuator system (56), which is configured to drive the support element (51) along the predefined stroke (ST) in an intermittent manner;
   - a first roller (54), which is mounted on board said support element (51) and is configured to be driven to rotate at a variable speed by the first actuator system (52);
   - a second roller (55), which is opposite the first roller (54) and is arranged on the opposite side relative to the feeding plane (FP) so as to cause the material (2) to move between the first and the second roller (55);

   the first actuator system (52) being configured to control the speed at least of the first roller (54) compensating for the intermittent movement of the support element (51) and substantially preserving a rolling condition between the first roller (54) and the material (2) .

2. An apparatus according to claim 1 and comprising at least a third roller (58) and a fourth roller (59) opposite the third one, wherein the first and the third roller (58) are connected to one another by a first oblong motion transmission element (60), in particular a belt or a chain, and wherein the second and the fourth roller (59) are connected to one another by a second oblong motion transmission element (61), in particular a belt or a chain.

3. An apparatus according to claim 1 or 2, wherein the second actuator system (56) is a linear electric motor (57), which is configured to move the support element (51) along the predefined stroke (ST).

4. An apparatus according to any one of the preceding claims, wherein the first actuator system (52) is an electric motor, in particular a brushless motor, arranged on board the support element (51).

5. An apparatus according to any one of the preceding claims, wherein the first and the second roller (55) are configured to move at the same speed, as they are connected by a motion transmission system.

6. An apparatus according to any one of the claims from 1 to 4, wherein the second roller (55) is an idler roller.

7. An apparatus according to any one of the preceding claims, wherein the first and the second roller (55) have the same size, in particular smaller than 20 mm.

8. A machine for the production of energy storage devices comprising an apparatus according to one of claims 1 to 7, a feeding system, which is configured to feed, in particular at a constant speed, a material (2) to be wound along the feeding plane (FP), and a winding apparatus (1) comprising:

   - a support (3);
   - a third actuator device;
   - a core (7) with an oblong shape, on which to wind the material (2) forming a winding (8) comprising a plurality of electrodes (E); said core (7) being arranged on said support in a rotary manner and being caused to rotate around a first rotation axis (A1) by the third actuator device;

   the apparatus comprises at least one holding element (9, 9'), which is configured to assume, during part of the winding:

   - at least a closing configuration, in which the holding element (9, 9') holds at least a portion (10) of material (2) in contact with the winding (8), thus avoiding relative movements between the portion (10) of material (2) and a first side surface (11, 12) of the core (7); and
   - an opening configuration, in which the holding element (9, 9') allows the material (2) to be wound on the first side surface (11, 12) of the core (7).

9. A method for the production of electric energy storage devices carried out by the apparatus according to claims 1 to 7 or the machine according to claim 8, the method comprising:

   - a feeding step, during which a feeding system feeds a material (2) along a feeding plane (FP) at a first speed;
   - a supporting step comprising, in turn, at least an accompanying sub-step (AS), during which the support apparatus (50), which is moved by means of a first actuator system (52) at a second speed, supports the material (2) along the feeding plane (FP) until it gets close to the core (7); and a recovery sub-step (RS), during which the support apparatus (50) steps back avoiding a collision with the rotating core (7); the support apparatus (50) comprising at least the first and the second roller (55), which are opposite one another and between which the material (2) moves.

10. A method according to claim 9, wherein the first roller (54) is driven by a second actuator system (56) at a third speed; the second and the third speed being at least partially variable; in particular, the first speed is substantially constant.

11. A method according to claim 10, wherein the third speed changes from the accompanying sub-step to the recovery sub-step (RS).

12. A method according to any one of the claims from 9 to 11, wherein the third speed at which the first roller (54) is driven corresponds to the difference between the first speed at which the material (2) is fed along the feeding plane (FP) and the second speed of the support apparatus (50) along the feeding plane (FP).

13. A method according to any one of the claims from 9 to 12 and comprising a winding step, during which the material (2) is wound (8) on a core (7) with an oblong shape to form a winding (8) comprising a plurality of electrodes (E) .

14. A method according to claim 13, wherein the winding step comprising a first sub-step, during which the core (7) is moved from a horizontal position, which is parallel to the feeding plane (FP), to a vertical position, in particular substantially perpendicular to the feeding plane (FP); and a second sub-step, during which the core (7) is moved from the vertical position to the horizontal position.

15. A method according to claim 14, wherein the accompanying step (AS) is at least partially, in particular entirely, simultaneous with the first sub-step; and wherein the recovery step (RS) is at least partially, in particular entirely, simultaneous with the second sub-step.

**Patentansprüche**

1. Eine Fördervorrichtung (1) für die Herstellung von elektrischen Energiespeichern; die Vorrichtung (1) weist auf

   - ein Förderelement (51), das linear entlang einer Zuführebene (FP) bewegbar ist, durch die ein Material (2) zugeführt wird, und das ausgebildet ist, um sich intermittierend entlang eines vordefinierten Hubs zu bewegen, der das Material (2) in einer kontinuierlichen Weise fördert; und

- ein erstes Aktuatorsystem (52);
- ein zweites Aktuatorsystem (56), das ausgebildet ist, um das Förderelement (51) entlang des vordefinierten Hubs (ST) intermittierend anzutreiben;
- eine erste Rolle (54), die an Bord des Förderelements (51) montiert ist und ausgebildet ist, um durch das erste Aktuatorsystem (52) mit einer variablen Geschwindigkeit angetrieben zu werden;
- eine zweite Rolle (55), die der ersten Rolle (54) gegenüberliegt und auf der gegenüberliegenden Seite in Bezug auf die Zuführebene (FP) angeordnet ist, um das Material (2) zu veranlassen, sich zwischen der ersten und der zweiten Rolle (55) zu bewegen;

wobei das erste Aktuatorsystem (52) ausgebildet ist, um die Geschwindigkeit zumindest der ersten Rolle (54) zu regeln, um die intermittierende Bewegung des Förderelements (51) zu kompensieren und einen Rollzustand zwischen der ersten Rolle (54) und dem Material (2) im Wesentlichen zu erhalten.

2. Die Vorrichtung nach Anspruch 1 weist mindestens eine dritte Rolle (58) und eine der dritten Rolle gegenüberliegende vierte Rolle (59) auf, wobei die erste und die dritte Rolle (58) durch ein erstes längliches Bewegungsübertragungselement (60), insbesondere einen Riemen oder eine Kette, miteinander verbunden sind und wobei die zweite und die vierte Rolle (59) durch ein zweites längliches Bewegungsübertragungselement (61), insbesondere einen Riemen oder eine Kette, miteinander verbunden sind.

3. Die Vorrichtung nach Anspruch 1 oder 2, wobei das zweite Aktuatorsystem (56) ein linearer Elektromotor (57) ist, der ausgebildet ist, um das Förderelement (51) entlang des vorgegebenen Hubs (ST) zu bewegen.

4. Die Vorrichtung nach einem der vorangehenden Ansprüche, wobei das erste Aktuatorsystem (52) ein Elektromotor, insbesondere ein bürstenloser Motor, ist, der an Bord des Förderelements (51) angeordnet ist.

5. Die Vorrichtung nach einem der vorangehenden Ansprüche, wobei die erste und die zweite Rolle (55) so ausgebildet sind, dass sie sich mit der gleichen Geschwindigkeit bewegen, da sie durch ein Bewegungsübertragungssystem verbunden sind.

6. Die Vorrichtung nach einem der Ansprüche 1 bis 4, wobei die zweite Rolle (55) eine Mitläuferrolle ist.

7. Die Vorrichtung nach einem der vorangehenden Ansprüche, wobei die erste und die zweite Rolle (55) die gleiche Größe, insbesondere kleiner als 20 mm, haben.

8. Eine Maschine zur Herstellung von Energiespeichern, aufweisend eine Vorrichtung nach einem der Ansprüche 1 bis 7, ein Zuführsystem, das ausgebildet ist, um ein zu wickelndes Material (2) entlang der Zuführebene (FP), insbesondere mit konstanter Geschwindigkeit, zuzuführen, und eine Wickelvorrichtung (1), aufweisend

- eine Stütze (3);
- eine dritte Aktuatorvorrichtung;
- einen Kern (7) mit einer länglichen Form, auf den das Material (2) zur Bildung einer Wicklung (8) aufweisend aufgewickelt wird, die eine Mehrzahl von Elektroden (E) aufweist; wobei der Kern (7) auf der Stütze drehbar angeordnet ist und durch die dritte Aktuatorvorrichtung in Drehung um eine erste Drehachse (A1) versetzt wird;

Die Vorrichtung weist mindestens ein Halteelement (9, 9') auf, das ausgebildet ist, um während eines Teils des Wickelns einzunehmen

- mindestens eine Schließkonfiguration, in der das Halteelement (9, 9') mindestens einen Abschnitt (10) des Materials (2) in Kontakt mit der Wicklung (8) hält, wodurch relative Bewegungen zwischen dem Abschnitt (10) des Materials (2) und einer ersten Seitenfläche (11, 12) des Kerns (7) vermieden werden; und
- eine Öffnungskonfiguration, in der das Halteelement (9, 9') es ermöglicht, das Material (2) auf die erste Seitenfläche (11, 12) des Kerns (7) zu wickeln.

9. Ein Verfahren zur Herstellung von elektrischen Energiespeichern, das mit der Vorrichtung nach den Ansprüchen 1 bis 7 oder der Maschine nach Anspruch 8 durchgeführt wird, wobei das Verfahren aufweist:

- einen Vorschubschritt, bei dem ein Zuführsystem ein Material (2) entlang einer Vorschubebene (FP) mit einer ersten Geschwindigkeit vorschiebt;
- einen Halteschritt, der seinerseits mindestens einen begleitenden Teilschritt (AS) aufweist, während dessen die Fördervorrichtung (50), die mittels eines ersten Aktuatorsystems (52) mit einer zweiten Geschwindigkeit bewegt wird, das Material (2) entlang der Zuführebene (FP) hält, bis es nahe an den Kern (7) gelangt; und einen Rückholteilschritt (RS), während dem die Fördervorrichtung (50) zurücktritt, um eine Kollision mit dem rotierenden Kern (7) zu vermeiden; wobei die Fördervorrichtung (50) mindestens die erste und die zweite Rolle (55) aufweist, die einander gegenüberliegen und zwischen denen sich das Material (2) bewegt.

10. Ein Verfahren nach Anspruch 9, wobei die erste Rolle (54) durch ein zweites Aktuatorsystem (56) mit einer dritten Geschwindigkeit angetrieben wird; die zweite und die dritte Geschwindigkeit sind zumindest teilweise variabel; insbesondere ist die erste Geschwindigkeit im Wesentlichen konstant.

11. Ein Verfahren nach Anspruch 10, wobei sich die dritte Geschwindigkeit von dem begleitenden Teilschritt zu dem Rückholteilschritt (RS) ändert.

12. Ein Verfahren nach einem der Ansprüche 9 bis 11, wobei die dritte Geschwindigkeit, mit der die erste Rolle (54) angetrieben wird, der Differenz zwischen der ersten Geschwindigkeit, mit der das Material (2) entlang der Förderebene (FP) gefördert wird, und der zweiten Geschwindigkeit der Fördervorrichtung (50) entlang der Förderebene (FP) entspricht.

13. Ein Verfahren nach einem der Ansprüche 9 bis 12, das einen Wickelschritt umfasst, bei dem das Material (2) auf einen Kern (7) mit einer länglichen Form gewickelt (8) wird, um eine Wicklung (8) auszubilden, die eine Vielzahl von Elektroden (E) umfasst.

14. Ein Verfahren nach Anspruch 13, wobei der Wickelschritt einen ersten Teilschritt aufweist, während dem der Kern (7) von einer horizontalen Position, die parallel zu der Zuführebene (FP) ist, in eine vertikale Position, insbesondere im Wesentlichen senkrecht zu der Zuführebene (FP), bewegt wird; und einen zweiten Teilschritt, während dem der Kern (7) von der vertikalen Position in die horizontale Position bewegt wird.

15. Ein Verfahren nach Anspruch 14, wobei der Begleitschritt (AS) zumindest teilweise, insbesondere vollständig, gleichzeitig mit dem ersten Teilschritt erfolgt; und wobei der Rückholschritt (RS) zumindest teilweise, insbesondere vollständig, gleichzeitig mit dem zweiten Teilschritt erfolgt.

**Revendications**

1. Appareil de support (1) pour la production de dispositifs de stockage d'énergie électrique ; l'appareil (1) comprend :

   - un élément de support (51), qui est mobile, de manière linéaire, le long d'un plan d'alimentation (FP), par le biais duquel un matériau (2) est alimenté et est configuré pour se déplacer, d'une manière intermittente, le long d'une course prédéfinie supportant le matériau (2) d'une manière continue ;
   - un premier système d'actionneur (52) ;
   - un deuxième système d'actionneur (56), qui est configuré pour entraîner l'élément de support (51) le long de la course (ST) prédéfinie d'une manière intermittente ;
   - un premier rouleau (54) qui est monté à bord dudit élément de support (51) et est configuré pour être entraîné afin de tourner à une vitesse variable grâce au premier système d'actionneur (52) ;
   - un deuxième rouleau (55) qui est opposé au premier rouleau (54) et est agencé sur le côté opposé par rapport au plan d'alimentation (FP) afin d'amener le matériau (2) à se déplacer entre le premier et le deuxième rouleau (55) ;

   le premier système d'actionneur (52) étant configuré pour contrôler la vitesse au moins du premier rouleau (54) compensant le mouvement intermittent de l'élément de support (51) et conservant sensiblement une condition de roulement entre le premier rouleau (54) et le matériau (2).

2. Appareil selon la revendication 1 et comprenant au moins un troisième rouleau (58) et un quatrième rouleau (59) opposé au troisième, dans lequel le premier et le troisième rouleau (58) sont raccordés entre eux par un premier élément de transmission de mouvement oblong (60), en particulier une courroie ou une chaîne, et dans lequel le deuxième et le quatrième rouleau (59) sont raccordés entre eux par un deuxième élément de transmission de mouvement oblong (61), en particulier une courroie ou une chaîne.

3. Appareil selon la revendication 1 ou 2, dans lequel le deuxième système d'actionneur (56) est un moteur électrique linéaire (57) qui est configuré pour déplacer l'élément de support (51) le long de la course (ST) prédéfinie.

4. Appareil selon l'une quelconque des revendications précédentes, dans lequel le premier système d'actionneur (52) est un moteur électrique, en particulier un moteur sans balai, agencé à bord de l'élément de support (51).

5. Appareil selon l'une quelconque des revendications précédentes, dans lequel le premier et le deuxième rouleau (55) sont configurés pour se déplacer à la même vitesse, lorsqu'ils sont raccordés par un système de transmission de mouvement.

**6.** Appareil selon l'une quelconque des revendications 1 à 4, dans lequel le deuxième rouleau (55) est galet fou.

**7.** Appareil selon l'une quelconque des revendications précédentes, dans lequel le premier et le deuxième rouleau (55) ont la même taille, en particulier inférieure à 20 mm.

**8.** Machine pour la production de dispositifs de stockage d'énergie comprenant un appareil selon l'une des revendications 1 à 7, un système d'alimentation, qui est configuré pour alimenter, en particulier à une vitesse constante, un matériau (2) à enrouler le long du plan d'alimentation (FP), et un appareil d'enroulement (1) comprenant :

- un support (3) ;
- un troisième dispositif d'actionneur ;
- un noyau (7) avec une forme oblongue, sur lequel enrouler le matériau (2) formant un enroulement (8) comprenant une pluralité d'électrodes (E) ; ledit noyau (7) étant agencé sur ledit support d'une manière rotative et étant amené à tourner autour d'un premier axe de rotation (A1) par le troisième dispositif d'actionneur ;

l'appareil comprend au moins un élément de maintien (9, 9') qui est configuré pour adopter, pendant une partie de l'enroulement :

- au moins une configuration de fermeture, dans laquelle l'élément de maintien (9, 9') maintient au moins une partie (10) de matériau (2) en contact avec l'enroulement (8), évitant ainsi des mouvements relatifs entre la partie (10) de matériau (2) et une première surface latérale (11, 12) du noyau (7) ; et
- une configuration d'ouverture, dans laquelle l'élément de maintien (9, 9') permet l'enroulement du matériau (2) sur la première surface latérale (11, 12) du noyau (7).

**9.** Procédé pour la production de dispositifs de stockage d'énergie électrique réalisée par l'appareil selon les revendications 1 à 7 ou la machine selon la revendication 8, le procédé comprenant :

- une étape d'alimentation, pendant laquelle un système d'alimentation alimente un matériau (2) le long d'un plan d'alimentation (FP) à une première vitesse ;
- une étape de support comprenant, à son tour, au moins une sous-étape d'accompagnement (AS), pendant laquelle l'appareil de support (50), qui est déplacé au moyen d'un premier système d'actionneur (52) à une deuxième vitesse, supporte le matériau (2) le long du plan d'alimentation (FP) jusqu'à ce qu'il soit proche du noyau (7) ; et une sous-étape de récupération (RS), pendant laquelle l'appareil de support (50) recule, évitant une collision avec le noyau (7) en rotation ; l'appareil de support (50) comprenant au moins le premier et le deuxième rouleau (55), qui sont opposés l'un par rapport à l'autre et entre lesquels le matériau (2) se déplace.

**10.** Procédé selon la revendication 9, dans lequel le premier rouleau (54) est entraîné par un deuxième système d'actionneur (56) à une troisième vitesse ; la deuxième et la troisième vitesse étant au moins partiellement variables ; en particulier, la première vitesse est sensiblement constante.

**11.** Procédé selon la revendication 10, dans lequel la troisième vitesse change de la sous-étape d'accompagnement à la sous-étape de récupération (RS).

**12.** Procédé selon l'une quelconque des revendications 9 à 11, dans lequel la troisième vitesse à laquelle le premier rouleau (54) est entraîné, correspond à la différence entre la première vitesse à laquelle le matériau (2) est alimenté le long du plan d'alimentation (FP) et la deuxième vitesse de l'appareil de support (50) le long du plan d'alimentation (FP).

**13.** Procédé selon l'une quelconque des revendications 9 à 12, et comprenant une étape d'enroulement, pendant laquelle le matériau (2) est enroulé (8) sur un noyau (7) avec une forme oblongue afin de former un enroulement (8) comprenant une pluralité d'électrodes (E).

**14.** Procédé selon la revendication 13, dans lequel l'étape d'enroulement comprend une première sous-étape, pendant laquelle le noyau (7) est déplacé d'une position horizontale, qui est parallèle au plan d'alimentation (FP), à une position verticale, en particulier sensiblement perpendiculaire au plan d'alimentation (FP) ; et une deuxième sous-étape, pendant laquelle le noyau (7) est déplacé de la position verticale à la position horizontale.

**15.** Procédé selon la revendication 14, dans lequel l'étape d'accompagnement (AS) est au moins partiellement, en particulier complètement, simultanée avec la première sous-étape ; et dans lequel l'étape de récupération (RS) est au moins partiellement, en particulier complètement, simultanée avec la deuxième sous-étape.

FIG. 1

FIG. 2

FIG. 3

FIG. 4

# FIG. 5

EP 4 136 695 B1

FIG. 6

EP 4 136 695 B1

FIG. 7

EP 4 136 695 B1

FIG. 8

FIG. 9

FIG. 10

**EP 4 136 695 B1**

**REFERENCES CITED IN THE DESCRIPTION**

**Patent documents cited in the description**

- IT 102020000007840
- IT 102020000007849
- WO 2018146638 A
- US 2013248636 A